# EUROPÄISCHE PATENTSCHRIFT

(11) **EP 1 210 224 B1**
(45) Veröffentlichungstag und Bekanntmachung des Hinweises auf die Patenterteilung: **16.06.2004**
(21) Anmeldenummer: 00960457.0
(22) Anmeldetag: 16.08.2000
(51) Int. Cl.: B29D 30/30

(54) **ZUFÜHRUNGSEINRICHTUNG FÜR STREIFENFÖRMIGE REIFENBAUTEILE**
FEEDING DEVICE FOR STRIPE-SHAPED TYRE COMPONENTS
DISPOSITIF D'ALIMENTATION POUR ELEMENTS DE PNEUS SOUS FORME DE BANDES

(30) Priorität: 16.08.1999 DE 19938149
(43) Veröffentlichungstag der Anmeldung: 05.06.2002
(73) Patentinhaber: Continental Aktiengesellschaft, 30165 Hannover (DE)
(72) Erfinder: JUNGK, Andreas, 30900 Wedemark (DE); MORIG, Gerd, 30926 Seelze (DE); RINGHOFF, Hubert, 30926 Seelze (DE)
(86) Internationale Anmeldenummer: PCT/EP2000/007944
(87) Internationale Veröffentlichungsnummer: WO 2001/012423

(56) Entgegenhaltungen:
- EP-A- 0 384 083
- EP-A- 0 454 094
- EP-A- 0 464 862
- EP-A- 0 482 830
- DE-A- 1 904 481
- FR-A- 2 496 616

## Beschreibung

Die Erfindung betrifft eine Zuführungseinrichtung für streifenförmige Reifenbauteile innerhalb einer Zubringereinrichtung (Servicer) für eine Reifenaufbautrommel, insbesondere für eine Gürteltrommel zum Aufbau des Gürtelpaketes, wobei auf der Reifenaufbautrommel nacheinander mehrere Lagen von unterschiedlichen oder unterschiedlich vorbehandelten im wesentlichen streifenförmigen Reifenbauteilen aufgelegt, angerollt und mit den bereits aufgelegten Materialien verbunden werden, wobei die Zubringereinrichtung
a) ein oder mehrere Speicher, vorzugsweise Trommelspeicher, sowie entsprechende zugehörige Zuführungseinrichtungen für das Reifenbauteil, sowie
b) ein oder mehrere den Zuführungseinrichtungen zugeordnete Schneideinrichtungen zum Ablängen des streifenförmigen Reifenbauteiles aufweist,
wobei die Zubringereinrichtung weiterhin ein oder mehrere Förderlinien /Förderwege aufweist, in denen die geschnittenen Reifenbauteile zur Reifenaufbautrommel gefördert werden.

Bei der klassischen Herstellung eines Neureifens mit flachliegend konfektionierter Karkasse werden auf eine Karkassen-Aufbautrommel mit horizontaler Rotationsachse zuerst die Innenseele oder Innenplatte eines Reifens und die Seitenwände aufgebracht und auf dem Trommelumfang angerollt, wodurch die noch unvulkanisierten Gummimaterialien miteinander verklebt werden, wie dies auch bei den weiteren später aufgebrachten Reifenbauteilen bzw. Reifenbaumaterialien je nach Erfordernis geschieht.

Anschließend werden, insbesondere bei LKW- oder Nutzfahrzeugreifen, wulstverstärkende Profile aufgelegt, beispielsweise sogenannte "Chafer", die auch mit textilen oder metallischen Festigkeitsträgern versehen sein können, und üblicherweise so angeordnet werden, daß im fertigen Reifen sich mindestens eine Karkasslage zwischen Kern und Chafer befindet.

Im weiteren werden in der Regel ein oder zwei Karkassenlagen aufgebracht, die aus gummierten textilen oder metallischen Festigkeitsträgern bestehen. Es folgt je nach Erfordernis die Auflage von Schulterfüllprofilen (shoulderpads), die im fertigen Reifen die Funktion haben, einen Ausgleich zwischen der auch an seinen Rändern flachen Gürtelkontur und der an den Gürtelrändern bereits stärker gewölbten Karkasskontur bereitzustellen.

Anschließend werden mit Hilfe einer Karkasstrage- und Kernzentrier-Einrichtung die üblicherweise bereits mit Kernreitern versehenen Wulstkerne über die Trommel geschoben und positioniert. Wulstkern und Kemreiter (Apex) sind hierbei bereits als eine vorgefertigte und auf einer separaten Trommel (Balgtrommel) hergestellte Einheit vorhanden und werden als vorgefertigte Ringe von der Seite über die auf der Reifenaufbautrommel bereits befindlichen Lagen aufgeschoben.

Bei anschließend expandierter Aufbautrommel werden die vorgefertigten Wulstkerne und die flach liegende Karkasse radial gegeneinander gepresst, so daß die inneren Oberflächen der Wulstkeme mit der äußeren Karkassenoberfläche verklebt und verbunden werden.

Danach wird die Trommel auf einen kleineren Durchmesser zusammengefahren und die Karkasse mit den gesetzten Wulstkernen - wiederum mit Hilfe der Karkasstrage- und Kernzentrier-Einrichtung - von der Trommel abgezogen und zur Bombiertrommel überführt.

Parallel zu Fertigung der Karkasse werden auf einer Gürtelaufbautrommel in der gesonderten Gürtel-Fertigungslinie die Gürtellagen, im allgemeinen sind dies zwei oder drei, bei der Herstellung von LKW-Reifen in aller Regel vier gummierte Stahlkordlagen, aufgebracht und ggf. mit einer oder zwei Lagen einer Nylonbandage versehen. Zwischen einzelnen Gürtellagen können Gürtelpufferstreifen angeordnet werden. Auf diesen Gürtelverband wird schließlich noch der ggf. mit einer Unterplatte versehene Laufstreifen aufgebracht.

Eine verfahrbare Gürteltrageeinrichtung zur Aufnahme des vorgefertigten Gürtelpaketes transportiert den so entstandenen Gürtellaufstreifenverband zur Bombiertrommel mit der bereits zentriert aufgespannten und vorbombierten Reifenkarkasse und positioniert diesen über der Reifenkarkasse.

Diese wird nun vollends bombiert und mit dem Gürtelpaket zusammengefügt, wobei mit dem Expandieren (Bombieren) der Karkasse auch der Hochschlagvorgang erfolgt, bei dem die Karkassenlagenenden um die Wulstkerne gefaltet und die Seitenteile hochgeschlagen werden. Dieser Vorgang wird mit Hilfe von Bälgen durchgeführt, wobei ein Mittenbalg den mittleren Teil der Karkasse expandiert und Seitenbombierbälge, also Blähbälge, die axial außerhalb der gesetzten Kernen angreifen, zum Hochschlagen der Seitenteile genutzt werden, ggf. unterstützt durch Andruckringe (Pusher), etc.

Nach dem Bombieren und dem Verbinden der Karkasse mit dem Gürtelpaket wird die Gürteltrageeinrichtung entfernt und der Laufstreifen mitsamt dem Gürtelpaket angerollt.

Nach dem Entspannen der Bombierbälge wird der fertiggestellte Rohreifen dann mit weiteren Transfereinrichtungen von der Bombiertrommel entnommen und in einer entsprechenden Vulkanisationsform ausvulkanisert, wo er somit seine endgültige Gestalt mit eingeformtem Laufstreifenprofil erhält, ggf. auch mit beschrifteten bzw. auch dekorativ gestalteten Seitenwänden.

Insbesondere an den Stationen der Reifenherstellung, bzw. der Fertigungsanlage, an denen mehrere streifenförmige Reifenbauteile direkt oder in Abständen nacheinander auf eine Reifenaufbautrommel aufgelegt werden, also beispielweise beim Auflegen von nacheinander vier gummierten Gürtellagen auf die Gürtelaufbautrommel einer LKW-Reifenfertigung, sind zur Erleichterung und zur Automatisierung des Herstellungsprozesses sogenannte Zubringereinrichtungen oder "Service" aufgestellt, die mit meistens mehreren Förder- und Schneideinrichtungen die streifenförmigen Reifenbauteile aus mehreren Speichern fördern, auf Länge und unter vorgegebenen Winkeln schneiden, bis zur Aufbautrommel transportieren und dort auf die bereits aufgelegten Materialien oder Bauteile auflegen.

Als Speicher für streifenförmige Reifenbauteile werden heute meistens Coil- oder Trommelspeicher / Speicherkassetten verwendet, in denen das für die Reifenbauteile nötige Material in Rollen abgelegt ist und über entsprechende Zuführwege und Zuführungseinrichtungen durch die Fördereinrichtungen der Zubringereinrichtung abgezogen werden kann. Die Speicher sind hierbei direkt an der Zubringereinrichtung angeordnet. Die Rollenaufnahme / das Rollenlager ist üblicherweise angetrieben, um Materialspannungen beim Abzug zu vermeiden. Zwischen den Speichern und den Fördereinrichtungen sind dabei in aller Regel Ausgleichs-Schlingen des Materiales vorgesehen, die ebenfalls diesem Zwecke dienen und Geschwindigkeitsunterschiede zwischen Rollenantrieb und Fördereinrichtung kompensieren.

Durch die Anzahl der Speicher bzw. durch die Anzahl der nacheinander aufzulegenden streifenförmige Reifenbauteile ergeben sich in entsprechender Anzahl erforderliche Zuführungseinrichtungen innerhalb der Zuführwege für das Reifenbauteil. So sind bei einer Zubringereinrichtung für vier gummierten Gürtellagen auf die Gürtelaufbautrommel einer LKW-Reifenfertigung entsprechend den vier Speichern für unterschiedlich aufgebaute Gürtellagenmaterialien auch vier Zuführungseinrichtungen für das Reifenbauteil erforderlich.

An bzw. unter den den Zuführungseinrichtungen zugehörigen Schneideinrichtungen beginnen Förderlinien, die von den räumlich unterschiedlich angeordneten Zuführungseinrichtungen / Schneideinrichtungen alle an denselben Zielort führen müssen, nämlich an die Reifenaufbautrommel bzw. an den auf dem Umfang der Reifenaufbautrommel befindlichen Auflagepunkt für die Reifenbauteile. Hierbei besteht bei den zur Reifenherstellung verwendeten Reifenbauteilen aus noch unvulkanisierten Gummimaterialien, beispielsweise also bei den aus gummierten Festigkeitsträgem bestehenden Gürtellagen, das Erfordernis, das Reifenbauteil ohne Dehnungen, Biegungen und andere Verformungen, also möglichst in flacher Auflage auf einer ebenen Unterlage, bis zur Reifenaufbautrommel zu fördern. Die Förderlinien sollen daher möglichst keinerlei Bogen- oder Kurvenführungen für die Reifenbauteile enthalten und müssen Fördereinrichtungen aufweisen, die das Reifenbauteil in möglichst flacher Auflage und ausschließlich in gerader Richtung von den örtlich/räumlich voneinander getrennten Zuführungseinrichtungen bis zu einem für alle Reifenbauteile gleichen Auflagepunkt auf die Reifenaufbautrommel fördern.

Dieses Problem wird im Stand der Technik dadurch gelöst, daß die jeder Förderlinie zugeordneten Fördereinrichtungen als umlaufende / durchlaufende Förderbänder mit möglichst ebenem Obertrum und meistens dreiteilig ausgebildet sind. In dieser dreiteiligen Konstruktion weisen die Fördereinrichtungen jeweils ausgehend von der Zuführungseinrichtung, also vom Einlauf des Reifenbauteiles aus dem Speicher, eine der Zuführungseinrichtung zugeordnete Fördereinrichtung zum Abzug des Reifenbauteiles aus einem Speicher und zur Positionierung des Reifenbauteiles in bzw. unter einer Schneideinrichtung auf (Vorschubband), eine weitere Fördereinrichtung zum Transport des geschnittenen Reifenbauteiles aus der Schneidlage zu der Reifenaufbautrommel (Trommelzuführband), sowie eine Fördereinrichtung zur Auflage des geschnittenen Reifenbauteiles auf die Reifenaufbautrommel (Übergabeband).

Das der Zuführungseinrichtung zugeordnete Vorschubband ist dabei nur relativ kurz, stationär angeordnet, und überdeckt einen Bereich der Förderlinie vom Einlauf des Reifenbauteiles, der üblicherweise über als Rollensysteme ausgebildete Führungs- und Leiteinrichtungen erfolgt, bis zur Schneideinrichtung, in der auf einer auf dem Vorschubband gleitenden Schiene das Reifenbauteil mit einem Rollenmesser geschnitten wird.

Die nachfolgende Fördereinrichtung zum Transport des geschnittenen Reifenbauteiles aus der Schneidlage zu der Reifenaufbautrommel, also das Trommelzuführband, auf welches das stirnseitig geschnittene Reifenbauteil danach aufgegeben wird, ist in einer solchen Länge ausgebildet, daß es die im wesentlichen durch den Reifenumfang vorgegebene Gesamtlänge des Reifenbauteiles, in diesem Fall also einer Gürtellage, aufnehmen kann. Nach Erreichen der nötigen Gürtellänge wird dann in der Schneideinrichtung der zweite endseitige Schnitt des Reifenbauteiles durchgeführt, wonach das geschnittene Reifenbauteil komplett dem Trommelzuführband übergeben wird.

Das Trommelzuführband ist dabei als ganzes, d.h. mit Antriebseinrichtungen, Bandrollen und Leitblechen zur Stützung des Obertrums verfahrbar und / oder verschwenkbar ausgebildet und kann von einer rückwärtigen Schneid- und Aufgabeposition, in der das Trommelzuführband beladen, d.h. in der das geschnittene Reifenbauteil dem Trommelzuführband zugeführt wird, in eine vorgerückte Auflageposition verfahren werden, in der es entladen, d.h. in der das Reifenbauteil auf die Reifenaufbautrommel aufgelegt wird.

Dabei steht das Trommelzuführband in der rückwärtigen Schneid- und Aufgabeposition in Linie und in gleicher Höhe mit dem Vorschubband, so daß das Reifenbauteil vom stationär innerhalb der Zubringereinrichtung angeordneten Vorschubband übergeben werden kann.

In der vorgerückten Auflageposition steht das Trommelzuführband dann in Linie mit der Reifenaufbautrommel und in gleicher Höhe mit dem Auflagepunkt, so daß das Reifenbauteil dort auf die Reifenaufbautrommel übergeben und aufgewickelt werden kann.

Das Trommelzuführband bewegt sich zur Übergabe des Reifenbauteiles auf die Reifenaufbautrommel also räumlich quer, meistens mit Hilfe verschiedener Parallelogrammführungen, Schwenk- und Hubmechanismen, wobei während dieser Bewegung des Trommelzuführbandes das (Förder-) Band als solches mit dem dort aufgelegten Reifenbauteil üblicherweise stillsteht, also nicht umläuft.

Der Umlauf des Trommelzuführbandes wird erst wieder zur Übergabe des Reifenbauteiles an die Reifenaufbautrommel gestartet.

Die vielfachen Übergaben von einem Förderband auf das folgende bewirken dabei nachteiligerweise entweder das Freisetzen von Materialspannungen oder erzeugen auch Dehnungen oder Stauchungen im Material, die sich bei der späteren Auflage auf die Reifenaufbautrommel als problematisch erweisen.

Da sich der Auflagepunkt bei vielen üblichen Zubringern am oberen Scheitelpunkt der Reifenaufbautrommel befindet, ist zur Übergabe des Reifenbauteiles an die Reifenaufbautrommel, bei der das Reifenbauteil tangential und oberschlächtig an den Trommelumfang geführt werden muß, dabei als weitere Fördereinrichtung in der Zuführlinie ein kurzes Übergabeband erforderlich. Dies ist nötig, da das Trommelzuführband nur mit seinem Untertrum tangential den oberen Scheitelpunkt der Reifenaufbautrommel erreichen könnte; das Reifenbauteil befindet sich jedoch glatt aufliegend auf dem Obertrum.

Ein solches Übergabeband ist als weiteres Förderband ausgebildet, welches sich an den der Reifenaufbautrommel zugewandten Endbereich des Trommelzuführbandes anschließt und dabei etwas höher als das Trommelzuführband angeordnet ist und letzteres in seinem Endbereich geringfügig überlappt. Der in diesem Endbereich dann verbleibende Spalt zwischen Obertrum des Trommelzuführbandes und Untertrum des Übergabebandes ist einstellbar und entspricht im wesentlichen der Dicke des aufzulegenden Reifenbauteiles.

in aller Regel ist dabei das Übergabeband auch an dem bzw. an der Rahmen- und Führungskonstruktion des Trommelzuführbandes befestigt und ist mit diesem von der rückwärtigen Schneid- und Aufgabeposition in die vorgerückte Auflageposition verfahrbar.

In der vorgerückten Auflageposition liegt nun das Untertrum des Übergabebandes im Bereich des oberen Scheitelpunktes der Reifenaufbautrommel, d.h. am Auflagepunkt, ebenfalls mit einem kleinen Spaltabstand und im wesentlichen tangential an. Werden in dieser Position Trommelzuführband und Übergabeband umlaufend mit gleicher Geschwindigkeit angetrieben, so haftet das auf dem Obertrum des Trommelzuführbandes nun vorgeförderte Reifenbauteil im Spaltbereich zwischen Obertrum des Trommelzuführbandes und Untertrum des Übergabebandes aufgrund seiner natürlichen Klebrigkeit mit seiner Oberseite am Untertrum des kurzen Übergabebandes und wird somit "hängend" tangential an die Reifenaufbautrommel geführt und dort aufgelegt. Das Haften am Untertrum des Übergabebandes kann dabei durch z.B. Unterdruckeinrichtungen unterstützt werden.

Bei einigen Zubringern befindet sich auch der Auflagepunkt im unteren Bereich der Reifenaufbautrommel, wobei dann zur Übergabe des Reifenbauteiles an die Reifenaufbautrommel auch das Trommelzuführband direkt genutzt werden kann und das Reifenbauteil tangential und unterschtächtig an den Trommelumfang geführt wird. Die Drehrichtung der Reifenaufbautrommel und der Auflage des Reifenbauteiles auf dem Trommelzuführband müssen dabei natürlich entsprechend angepaßt werden.

Bei der Auflage von vier gummierten Gürtellagen auf die Gürtelaufbautrommel einer LKW-Reifenfertigung entstehen also vier Zuführlinien und daran jeweils anschließend vier Förderlinien, die alle mit entsprechenden Förder- und Schneideinrichtungen versehen sind. Damit ergeben sich neben den bereits geschilderten Problemen durch die vielfachen Übergaben natürlich ein überaus komplexer konstruktiver Aufbau der Zuführungs- und Zubringereinrichtung und ein Platzbedarf, der den der eigentlichen Reifenaufbautrommel nebst Zusatzaggregaten um ein Vielfaches überschreitet. Zubringereinrichtungen für eine solche Vierfachauflage können dabei parallel angeordnete Zuführ- und Förderlinien aufweisen, oder auch paarweise übereinander angeordnete. Der Aufwand für Instandhaltung und Reparatur steigt entsprechend der Komplexität einer solchen Anlage überproportional, so daß insgesamt eine wirtschaftlich Betriebsweise nur mit permanenten sehr großen Stückzahlen erreichbar ist.

Die FR-2 496 616 und EP-0 464 862 offenbaren Vorrichtungen zur Reifenherstellung mit mehreren Förderlinien. Die Fördereinrichtungen sind jedoch zum Abzug des Reifenbauteils aus dem Speicher nicht einteilig mit Fördereinrichtungen zum Transport des Reifenbauteils ausgebildet. In der EP-0 384 083 ist ebenfalls eine Vorrichtung zur Reifenherstellung offenbart. Diese Vorrichtung enthält u.a. kein Fördersystem, das zwischen einer rückwärtigen Schneid- und Aufgabeposition und einer vorgerückten Auflageposition verfahrbar ist.

Für die Erfindung bestand also die Aufgabe, eine Zuführungseinrichtung bereitzustellen, die es erlaubt, die Anzahl der Fördereinrichtungen und damit der Übergaben innerhalb einer Zubringereinrichtung zu reduzieren, die dabei eine möglichst ebene, gradlinige und spannungsfreie Auflage des Reifenbauteiles gewährleistet, die in wirtschaftlicher Weise herzustellen und zu betreiben ist, und die in ihrer Konstruktion in den vorhandenen Anlagen zur Reifenherstellung leicht zu integrieren ist.

Gelöst wird die Aufgabe durch die Merkmale des Hauptanspruchs. Vorteilhafte Weiterbildungen sind in den Unteransprüchen enthalten.

Hierbei sind jeweils innerhalb einer Förderlinie die Fördereinrichtung zum Abzug des Reifenbauteiles aus dem Speicher und zur Positionierung des Reifenbauteiles in bzw. unter der Schneideinrichtung, und die Fördereinrichtung zum Transport des geschnittenen Reifenbauteiles zu der Reifenaufbautrommel als miteinander verbundenes einteiliges Fördersystem ausgebildet, vorzugsweise als ein umlaufendes / durchlaufendes Förderband, wobei das einteilige Fördersystem innerhalb der Zubringereinrichtung zwischen einer rückwärtigen Schneid- und Aufgabeposition, in der das geschnittene Reifenbauteil dem einteiligen Fördersystem zugeführt wird, und einer vorgerückten Auflageposition, in der das Reifenbauteil auf die Reifenaufbautrommel aufgelegt wird, verfahrbar ausgebildet ist, wobei die Zuführungeinrichtungen relativ zum jeweilgen einteiligen Fördersystem so angeordnet und/oder verfahrbar ausgebildet sind, daß das einteilige Fördersystem in seiner rückwärtigen Schneid- und Aufgabeposition jeweils mit einer Schneideinrichtung in Wirkverbindung steht, und wobei
die Zuführungseinrichtung und das einteilige Fördersystem mit Halte- oder Fixiereinrichtungen für das Reifenbauteil versehen sind, die dem Reifenbauteil zustellbar und im Bereich der Schneideinrichtung angeordnet sind, und die während des Verfahrens des einteiligen Fördersystems sowohl das aus dem Speicher abgezogene und nach dem Schnitt relativ zur Schnittlinie speicherseitig verbleibende Reifenbauteil als auch das auf das einteilige Fördersystem bereits aufgegebene Reifenbauteil temporär fixieren.

Durch eine solche Ausbildung der Zuführungseinrichtung ist es möglich, das speicherseitig nach dem Schnitt verbleibende Reifenbauteil in Position zu halten, ohne daß eine Auflage auf einem der Förderbänder erforderlich ist. Hierdurch wird eine Konstruktion der Zubringereinrichtung ermöglicht, bei der Vorschubband und Trommelzuführband als einteiliges Fördersystem ausgebildet sind, welches zwischen einer rückwärtigen Schneid- und Aufgabeposition und einer vorgerückten Auflageposition verfahrbar ist und somit nur zum Beladen bzw. zum Aufgeben des Reifenbauteiles in den Bereich der Zuführungseinrichtung bewegt wird und dort das einlaufende Reifenbauteil trägt.

Es ist also kein separates Vorschubband mehr erforderlich, wodurch in jeder Förderlinie eine der kritischen Materialübergaben von einem Förderband auf das folgende entfällt.

Weiterhin ergibt sich dadurch der wesentliche Vorteil, daß ein Trommelzuführband, also ein einteiliges Fördersystem mit mehreren Zuführungseinrichtungen kombiniert werden kann, wonach dann das Trommelzuführband in verschiedene rückwärtige Schneid- und Aufgabepositionen verfahren werden kann, wo dann jeweils unterschiedliche Reifenbauteile, also etwa unterschiedliche Gürtellagen, geschnitten und aufgelegt werden können. Da in diesem Fall nur eine einteilige Fördereinrichtung, nämlich das Trommelzuführband für mehrere Zuführungseinrichtungen genutzt werden kann, werden die kritischen Übergabestellen weiter drastisch reduziert.

Vorteilhafterweise ist die Zuführungseinrichtung so ausgebildet, daß die Halte- oder Fixiereinrichtung für das nach dem Schnitt relativ zur Schnittlinie speicherseitig verbleibende Reifenbauteil und die Schneideinrichtung innerhalb einer der Zuführungseinrichtung zugeordneten Hubeinrichtung angeordnet sind, mit der die Halte- oder Fixiereinrichtung, die Schneideinrichtung, und das temporär fixierte Reifenbauteil in eine Position oberhalb der Ebene des Obertrums des umlaufenden / durchlaufenden Förderbandes des einteiligen Fördersystems verfahrbar sind.

Durch eine solche Ausbildung wird das Einfahren des Trommelzuführbandes in die rückwärtige Schneid- und Aufgabeposition insofern erleichtert, als die Führungen, die Antriebs- und Schwenkmechanismen zum Erreichen dieser Position innerhalb normaler Toleranzausbildungen ausgeführt sein können, da beim Einfahren in die rückwärtige Schneid- und Aufgabeposition die Halte- oder Fixiereinrichtung und die Schneideinrichtung mit dem Reifenbauteil in eine sichere und beabstandete Hubposition gefahren werden können, aus der das Reifenbauteil und die genannten Einrichtungen dann auf das in der rückwärtigen Schneid- und Aufgabeposition befindliche Trommelzuführband abgesenkt werden können.

Insbesondere bei der Verwendung von Reifenbauteilen, die mit metallischen Festigkeitsträgern versehen sind, also etwa bei gummierten Gürtellagen, besteht eine vorteilhafte Ausbildung darin, daß die Halte- oder Fixiereinrichtung für das nach dem Schnitt relativ zur Schnittlinie speicherseitig verbleibende Reifenbauteil aus einer oberhalb des Reifenbauteiles angeordneten und dem Reifenbauteil zustellbaren Druckplatte und aus einer oberhalb der Druckplatte angeordneten und der Druckplatte bzw. dem Reifenbauteil zustellbaren Magnetplatte besteht, wobei die Magnetplatte das Reifenbauteil an der Druckplatte fixiert.

Solche Magnetplatten können aus Permanentmagneten bestehen, so daß eine zusätzliche Zufuhr von elektrischer Energie nicht erforderlich ist, oder können auch zuschaltbare Elektromagneten aufweisen.

Eine weitere vorteilhafte Ausbildung besteht darin, daß die Halte- oder Fixiereinrichtung für das nach dem Schnitt relativ zur Schnittlinie speicherseitig verbleibende Reifenbauteil aus einer oberhalb des Reifenbauteiles angeordneten und dem Reifenbauteil zustellbaren gelochten bzw. luftdurchlässigen Druckplatte und aus einer oberhalb der Druckplatte angeordneten und ggf. der Druckplatte bzw. dem Reifenbauteil zustellbaren Vakuumeinrichtung besteht, wobei die Vakuumeinrichtung das Reifenbauteil an der Druckplatte fixiert.

Mit einer solchen Einrichtung lassen sich auf einfache Weise auch Reifenbauteile fixieren, die keinerlei metallische Einlagen enthalten, also beispielsweise gewebeverstärkte Lagen oder Gummilagen ohne jegliche Verstärkungen.

Für solche Arten von Reifenbauteilen, die eine verteilte punktuelle Aufnahme ohne Einflüsse auf das weitere Verarbeitungsverfahren aufnehmen können, besteht eine weitere vorteilhafte Ausbildung darin, daß die Halte- oder Fixiereinrichtung für das nach dem Schnitt relativ zur Schnittlinie speicherseitig verbleibende Reifenbauteil aus einer Vielzahl von auf einer Grundplatte angeordneten und das einteilige Fördersystem durchgreifenden Nadeln besteht, wobei die mit Nadeln versehene Grundplatte unterhalb des einteiligen Fördersystems angeordnet ist.

Bei einer genügenden Anzahl von Nadeln erreicht man hierbei nur ein minimales Eindringen der Nadelspitzen in das Material, wobei die dadurch entstehenden kleinen Eindrücke durch die spätere Vulkanisation wieder geschlossen werden.

Das Trommelzuführband kann dabei beispielsweise so ausgebildet sein, daß es aus einer Vielzahl von nebeneinander angeordneten schmalen Förderbändern besteht, so daß die Nadeln in den Zwischenräumen das einteilige Fördersystem durchgreifen und das Reifenbauteil abstützen können.

Die bereits geschilderten Vorteile einer Halterung oder Fixierung durch Magnetkraft bei Reifenbauteilen mit metallischen Festigkeitsträgem ergeben sich auch in einer weiteren Ausführung, die darin besteht, daß die Halte- oder Fixiereinrichtung für das auf das einteilige Fördersystem bereits aufgegebene Reifenbauteil als eine zwischen Obertrum und Untertrum des als umlaufendes /durchlaufendes Förderband ausgebildeten einteiligen Fördersystems angeordnete und dem Obertrum bzw. dem Reifenbauteil zustellbare Magnetplatte ausgebildet ist.

Durch die Anordnung einer solchen Magnetplatte zwischen Obertrum und Untertrum des einteiligen Fördersystems und im Bereich der Schneideinrichtung, d. h. also im rückwärtigen Teil des Trommelzuführbandes, der beim Erreichen der rückwärtigen Schneid- und Aufgabeposition unterhalb bzw. innerhalb der Zuführungseinrichtung sich befindet, kann auch hier auf verhältnismäßig einfache Weise eine Fixierung des Reifenbauteiles, insbesondere während des Schnittes, erfolgen.

Bei der Zuführung von Reifenbauteilen, die keine metallischen Festigkeitsträger enthalten, also etwa bei gewebeverstärkten gummierten Bauteilen, besteht - wie bereits bei der Halte- und Fixiereinrichtung innerhalb der Hubeinrichtung - eine vorteilhafte Ausbildung darin, daß die Halte- oder Fixiereinrichtung für das auf das einteilige Fördersystem bereits aufgegebene Reifenbauteil als eine zwischen Obertrum und Untertrum des als umlaufendes / durchlaufendes und ggf. luftdurchlässiges Förderband ausgebildeten einteiligen Fördersystems angeordnete und ggf. dem Obertrum bzw. dem Reifenbauteil zustellbare Vakuumeinrichtung ausgebildet ist.

Eine weitere vorteilhafte Ausbildung besteht darin, daß die Zuführungseinrichtung eine mit der Hubeinrichtung bewegbare und als Rollensystem ausgebildete Führungs- und Leiteinrichtung für das aus dem Speicher abgezogene Reifenbauteil aufweist.

Durch eine solche Führungs- und Leiteinrichtung, die mit der Hubeinrichtung verbunden ist, vermeidet man bereits beim Einlauf des Reifenbauteiles ungewünschte Dehnungen und Spannungen, die durch ein häufiges Bewegen oder Ändern der Krümmung des einlaufendes Reifenbauteiles entstehen könnten.

Anhand eines Ausführungsbeispiels soll die Erfindung näher erläutert werden. Es zeigen:
- Fig. 1a: eine vereinfachte Darstellung einer Zubringereinrichtung mit einer erfindungsgemäßen Zuführungseinrichtung in der Ansicht
- Fig. 1b: die Zubringereinrichtung mit der erfindungsgemäßen Zuführungseinrichtung gemäß Figur 1a in der Draufsicht
- Fig. 2a + 2b: anhand einer Prinzipskizze die unterschiedlichen Arbeitsschritte A1 bis A15 der Zuführungseinrichtung während eines Arbeitszyklus.

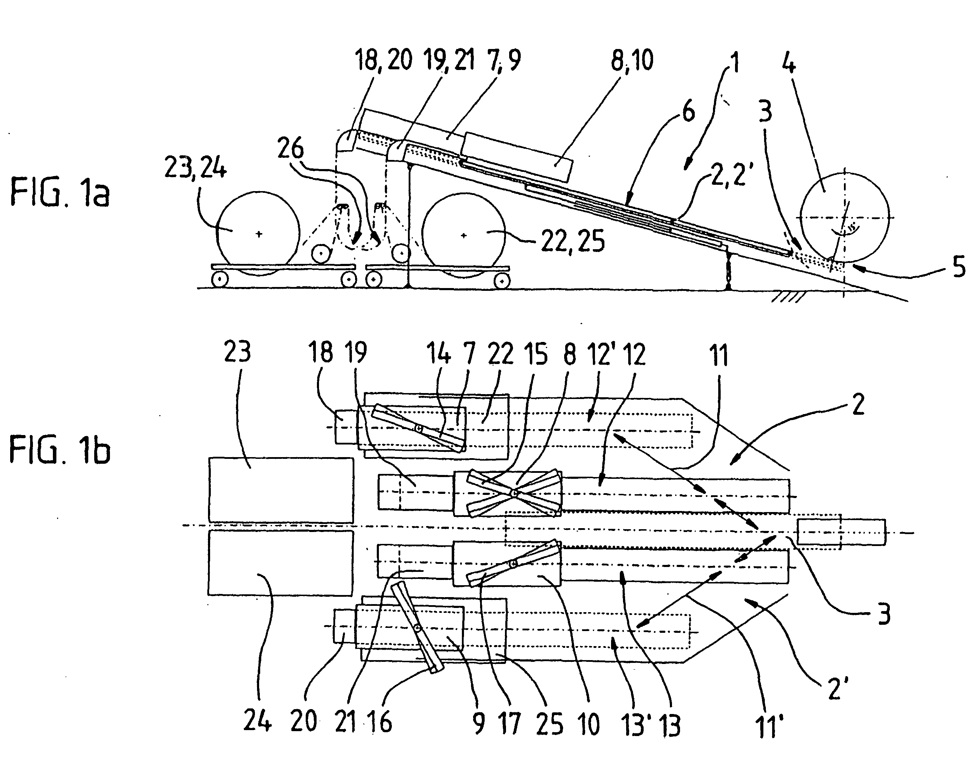

In der Zusammenschau der Figuren 1a und 1b erkennt man eine Zubringereinrichtung 1, bei der das als einteiliges Fördersystem ausgebildete Trommelzuführband 2, 2' in seiner vorgerückten Auflageposition 3 bis an einen im unteren Bereich der Reifenaufbautrommel 4 befindlichen Auflagepunkt 5 verfährt, wobei damit zur Übergabe des auf dem Trommelzuführband aufliegenden und hier nicht näher dargestellten und mit metallischen Verstärkungselementen versehenen Reifenbauteiles 6 das Trommelzuführband direkt genutzt werden kann und das Reifenbauteil somit tangential und unterschlächtig an den Umfang der Reifenaufbautrommel 4 geführt wird.

Eine solche Zubringereinrichtung wird auch als "Bottom Belt Servicer" bezeichnet und weist dabei vier verschiedene erfindungsgemäße Zuführungseinrichtungen 7 bis 10 auf, die stationär im hinteren bis mittleren Bereich des Zubringers angeordnet sind.

Die beiden Trommelzuführbänder 2 und 2' sind innerhalb der von ihnen definierten schrägen Ebene in den Richtungen 11 und 11 schräg zwischen der vorgerückten Auflageposition 3 und jeweils zwei rückwärtigen Schneid- und Aufgabepositionen 12, 12' und 13, 13' verfahrbar, wobei die Trommelzuführbänder in den rückwärtigen Schneid- und Auflagepositionen jeweils mit ihrem hinteren Teil in den Bereich bzw. unter die Zuführungseinrichtungen 7, 8 sowie 9 und 10 einfahren.

Die Zuführungseinrichtungen weisen dabei jeweils Schneideinrichtungen 14 bis 17 auf, die als auf einer Schneidschiene laufende Rollenmesser ausgebildet sind und das Reifenbauteil, d. h. also die unterschiedlichen Gürtellagen in diesem Fall in jeweils unterschiedlichen Winkeln am Anfang und am Ende schneiden.

Weiterhin weisen die Zuführungseinrichtungen jeweils Führungs- und Leiteinrichtungen 18 bis 21 auf, über welche das in Rollen innerhalb der Speicherkassetten 22 bis 25 gespeicherte Reifenbauteil abgezogen werden kann.

Die Speicherkassetten sind dabei im hinteren Teil des Zubringers und teilweise unter den übrigen Einrichtungen angeordnet, so daß für die gesamte Maschine möglichst wenig Grundfläche benötigt wird. Zwischen den Speicherkassetten und den Zuführungseinrichtungen bzw. Fördereinrichtungen sind dabei Ausgleichs-Schlingen 26 des Materiales bzw. des Reifenbauteiles vorgesehen, die Geschwindigkeitunterschiede zwischen dem Rollenantrieb, der Speicherrollen und der Fördereinrichtung kompensieren und Materialspannungen vermeiden.

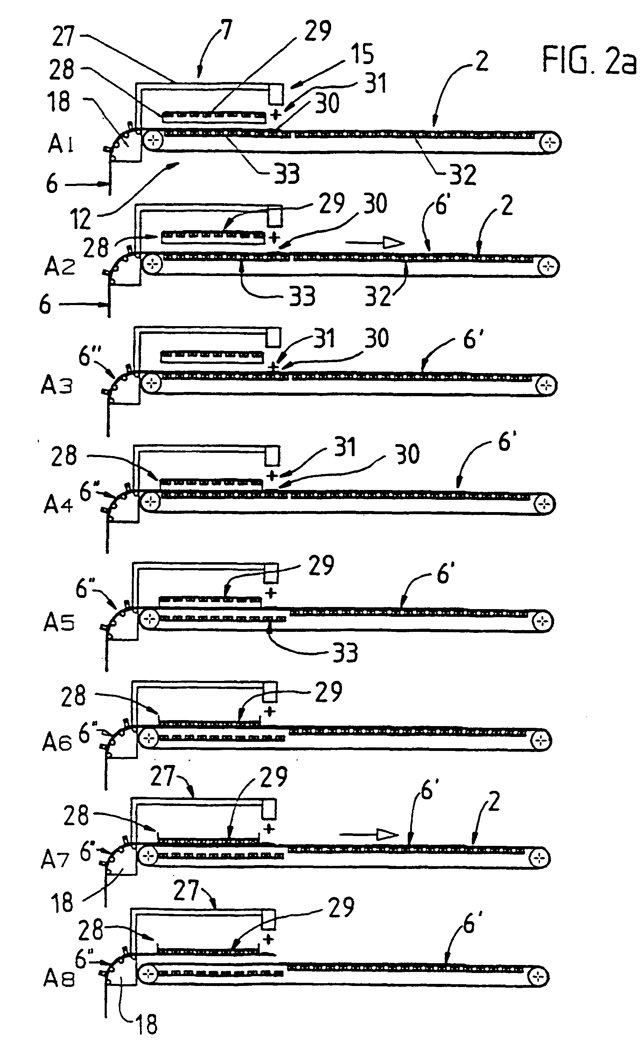

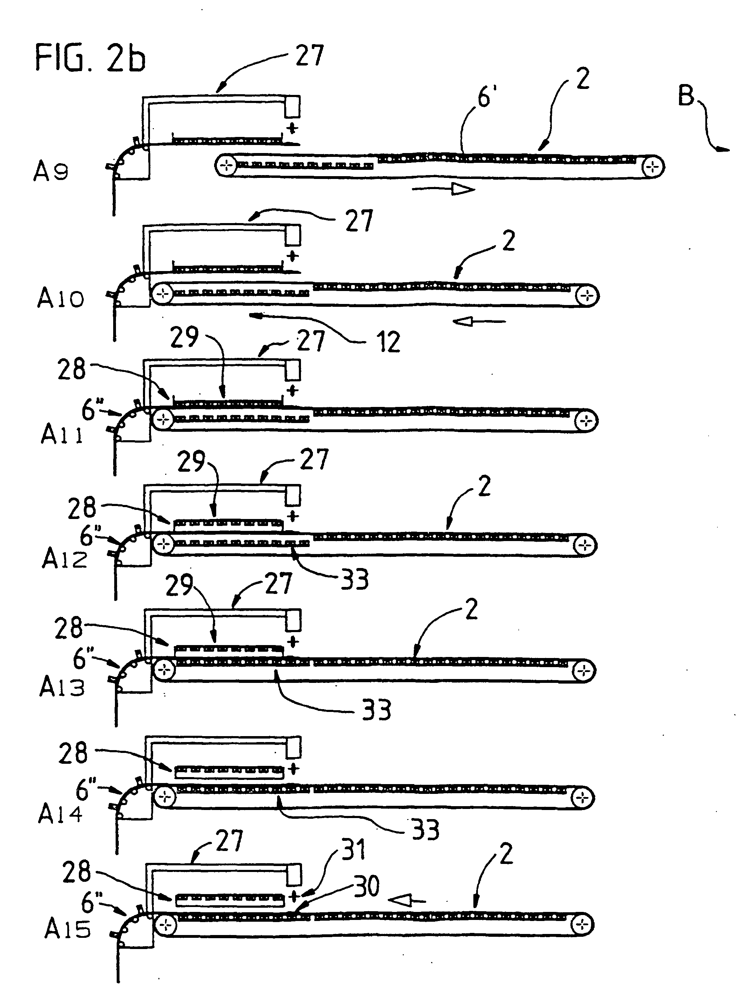

In der Zusammenschau der Figuren 2a und 2b erkennt man in Form einer Prinzipskizze die Arbeitsweise der erfindungsgemäßen Zuführungseinrichtung im Zusammenhang mit dem Trommelzuführband anhand der Arbeitsschritte A1 bis A15, die für das Abziehen der Reifenbauteile aus dem Speicher, das Schneiden und das nachfolgende Auflegen auf die Reifenaufbautrommel, erforderlich sind. Es handelt sich hierbei um eine Zuführungseinrichtung, die zur Auflage von Reifenbauteilen 6 dient, welche metallische Verstärkungselemente aufweisen und darum in einfachster Weise mit Halte- und Fixiereinrichtungen in Form von Magnetplatten ausgebildet ist.

Im Arbeitsschritt A 1 ist das Trommelzuführband 2 in seine rückwärtige Schneid- und Aufgabeposition zurückgefahren, befindet sich mit dem hinteren Ende im Bereich der Zuführungseinrichtung 7 und unterhalb der Schneideinrichtung 15 bzw. unterhalb einer Hubeinrichtung 27, in oder an welcher die Schneideinrichtung 15, eine zustellbare Druckplatte 28, eine obere Magnetplatte 29 sowie die Führungs- und Leiteinrichtung 18 angeordnet sind.

Auf dem Obertrum des als umlaufendes Förderband ausgebildeten Trommelzuführbandes 2 liegt eine hier nicht näher dargestellte Schneidleiste 30 auf, die beim Schnitt des Reifenbauteiles 6 zwischen Reifenbauteil und Förderband liegt, so daß das verfahrbare Rollenmesser 31 nur in das Reifenbauteil, nicht aber in das Förderband einschneiden kann.

Im Arbeitsschritt A 2 wird nun durch Antrieb des Trommelzuführbandes 2 das Reifenbauteil 6 auf das Trommelzuführband in entsprechender Länge, die durch den Umfang der Reifenaufbautrommel vorgegeben ist, aufgefördert, und aus dem hier nicht mehr dargestellten Speicher abgezogen.

Das Trommelzuführband 2 weist dabei in seinem vorderen und mittleren Bereich unterhalb des Obertrums anliegende feststehende Magnete 32 und in seinem hinteren Bereich eine dem Obertrum bzw. dem Reifenbauteil zustellbare untere Magnetplatte 33 auf. Während des im Arbeitsschritt A2 erfolgenden Vorförderns des Reifenbauteiles ist die Druckplatte 28 und die obere Magnetplatte 29 angehoben und die untere Magnetplatte 33 dem Obertrum des Trommelzuführbandes 2 bzw. dem Reifenbauteil zugestellt, so daß das aufzuladende Reifenbauteil 6 auf dem Trommelzuführband fixiert und ohne Schlupf aufgefördert werden kann.

Im Arbeitsschritt A 3 fährt das Rollenmesser 31 in seine Schneidposition und trennt durch einen quer- oder schrägverlaufenden Schnitt das Reifenbauteil 6 in einen entsprechend abgelängten Teil 6' zur Auflage auf die Reifenaufbautrommel und in ein nach dem Schnitt relativ zur Schnittlinie speicherseitig verbleibenden Reifenbauteil 6". Danach fährt das Rollenmesser 31 wieder in seine Ruheposition, wie im Arbeitsschritt A 4 dargestellt.

In diesem Arbeitsschritt wird auch die Druckplatte 28 dem speicherseitig verbleibenden Reifenbauteil 6" zugestellt, wonach im Arbeitsschritt A 5 die untere Magnetplatte 33 von ihrer Anlage unterhalb des Obertrums des Trommelzuführbandes bzw. aus der Nähe des Reifenbauteiles zurückgefahren bzw. abgesenkt wird.

Im Arbeitsschritt A 6 wird dann die obere Magnetplatte 29 der Druckplatte 28 bzw. dem Reifenbauteil 6" zugestellt, wonach im Arbeitsschritt A 7 die gesamte Hubeinrichtung 27 um zunächst ca. 5 mm angehoben wird, so daß das nun an der Druckplatte fixierte Reifenbauteil 6" sich vom Obertrum des Trommelzuführbandes 2 löst. Das Trommelzuführband kann nun wieder angetrieben werden, wodurch das abgelängte Reifenbauteil 6' weiter vorgefördert und dessen hinteres Ende aus dem Bereich der Schneideinrichtung und des Rollenmessers entfernt wird.

Im Arbeitsschritt A 8 erfolgt dann der Vollhub der Hubeinrichtung 27 mitsamt dem an der Druckplatte 28 durch die Magnetwirkung der Magnetplatte 29 fixierten Reifenbauteil 6" auf etwa 50 mm oberhalb des Obertrums des Trommelzuführbandes 2. Das Reifenbauteil 6" ist damit völlig sicher und in glatter Anlage zur Druckplatte fixiert, wodurch jegliche Spannungen und Materialdehnungen vermieden werden. Dies wird dadurch unterstützt, daß auch die Führungs- und Leiteinrichtung 18 mit der Hubeinrichtung bewegt wird.

Im Arbeitsschritt A 9 fährt nun das als einteiliges Fördersystem ausgebildete Trommelzuführband 2 insgesamt und mit allen Antriebs- und Rolleneinrichtungen in seine vorgerückte Auflageposition 3, in der das Reifenbauteil 6' auf die Reifenaufbautrommel aufgelegt wird.

Nach der Auflage des Reifenbauteiles 6' auf die Reifenaufbautrommel fährt das Trommelzuführband 2 wieder zurück in seine rückwärtige Schneid- und Aufgabeposition 12 und in den Bereich der Zuführungseinrichtung 7, wie im Arbeitsschritt A 10 gezeigt.

Im Arbeitsschritt A 11 wird nun die Hubeinrichtung 27 wieder abgesenkt, so daß das noch an der Druckplatte 28 mit Hilfe der oberen Magnetplatte 29 fixierte Reifenbauteil 6" wieder zur Auflage auf den im Bereich der Zuführungseinrichtung 7 befindlichen Teil des Trommelzuführbandes 2 kommt.

Im Arbeitsschritt A 12 wird dann die obere Magnetplatte 29, die bisher der Druckplatte 28 und dem Reifenbauteil 6" zugestellt war, angehoben, wodurch die Fixierung an der Druckplatte gelöst wird.

Im Arbeitsschritt A 13 wird nun die untere Magnetplatte 33 wiederum dem Obertrum des Trommelzuführbandes 2 und gleichzeitig dem Reifenbauteil 6" zugestellt, wodurch nun das Reifenbauteil 6" am Obertrum des Trommelzuführbandes 2 fixiert wird.

Im Arbeitsschritt A 14 wird dann auch die Druckplatte 28 mitsamt der Magnetplatte 29 innerhalb der Hubeinrichtung 27 angehoben, d. h. ohne daß die Hubeinrichtung 27 selbst betätigt wird. Das Reifenbauteil 6" ist nunmehr auf dem Obertrum des Trommelzuführbandes vollständig fixiert und auch mit diesem bewegbar, wonach im Arbeitsschritt A 15 lediglich ein kurzes Zurückfördern des Reifenbauteil 6" erfolgt, damit ein Abreißen von der Schneidleiste 30, auf der das Reifenbauteil während der gesamten Fixierung innerhalb der Zuführungseinrichtung auflag, durchgeführt werden kann, wonach dann mit dem Arbeitsschritt A 1 bzw. A 2 wieder ein Vorfördern und ein Beladen des Trommelzuführbandes 2 erfolgt.

### Bezugszeichenliste

- 1: Zubringereinrichtung
- 2,2': Trommelzuführband
- 3: vorgerückte Auflageposition
- 4: Reifenaufbautrommel
- 5: Auflagepunkt
- 6: Reifenbauteil
- 6': abgelängtes Reifenbauteil
- 6": speicherseitig verbleibendes Reifenbauteil
- 7-10: Zuführungseinrichtung
- 11, 11': Verfahr-Richtung
- 12, 12' 13, 13': rückwärtige Schneid- und Aufgabeposition
- 14 - 17: Schneideinrichtung
- 18 - 21: Führungs- und Leiteinrichtung
- 22 - 25: Speicherkassetten
- 26: Ausgleichs-Schlinge
- 27: Hubeinrichtung
- 28: Druckplatte
- 29: obere Magnetplatte
- 30: Schneidleiste
- 31: Rollenmesser
- 32: feststehende Magnete
- 33: untere Magnetplatte

## Patentansprüche

1. Zuführungseinrichtung (7-10) für streifenförmige Reifenbauteile innerhalb einer Zubringereinrichtung (1) (Servicer) für eine Reifenaufbautrommel (4), insbesondere für eine Gürteltrommel zum Aufbau des Gürtelpaketes, wobei auf der Reifenaufbautrommel (4) nacheinander mehrere Lagen von unterschiedlichen oder unterschiedlich vorbehandelten im wesentlichen streifenförmigen Reifenbauteilen (6) aufgelegt, angerollt und mit den bereits aufgelegten Materialien verbunden werden, wobei die Zubringereinrichtung (1)
a) ein oder mehrere Speicher, vorzugsweise Trommelspeicher, sowie entsprechende zugehörige Zuführungseinrichtungen (7-10) für das Reifenbauteil (6), sowie
b) ein oder mehrere den Zuführungseinrichtungen (7-10) zugeordnete Schneideinrichtungen (14-17) zum Ablängen des streifenförmigen Reifenbauteiles (6) aufweist,
wobei die Zubringereinrichtung (1) weiterhin ein oder mehrere Förderlinien /Förderwege aufweist, in denen die geschnittenen Reifenbauteile (6) zur Reifenaufbautrommel (4) gefördert werden, wobei
c) jeweils innerhalb einer Förderlinie die Fördereinrichtung zum Abzug des Reifenbauteiles (6) aus dem Speicher und zur Positionierung des Reifenbauteiles (6) in bzw. unter der Schneideinrichtung (14-17), und die Fördereinrichtung zum Transport des geschnittenen Reifenbauteiles (6) zu der Reifenaufbautrommel (4) als miteinander verbundenes einteiliges Fördersystem ausgebildet sind, vorzugsweise als ein umlaufendes durchlaufendes Förderband, wobei
d) das einteilige Fördersystem innerhalb der Zubringereinrichung (1) zwischen einer rückwärtigen Schneid- und Aufgabeposition (12, 12', 13, 13'), in der das geschnittene Reifenbauteil (6) dem einteiligen Fördersystem zugeführt wird, und einer vorgerückten Auflageposition (3), in der das Reifenbauteil (6) auf die Reifenaufbautrommel (4) aufgelegt wird, verfahrbar ausgebildet ist, wobei
e) die Zuführungseinrichtungen (7-10) relativ zum jeweiligen einteiligen Fördersystem so angeordnet und/oder verfahrbar ausgebildet sind, daß das einteilige Fördersystem in seiner rückwärtigen Schneid- und Aufgabeposition (12, 12',13,13') jeweils mit einer Schneideinrichtung (14-17) in Wirkverbindung steht, und wobei
f) die Zuführungseinrichtung (7-10) und das einteilige Fördersystem mit Halte- oder Fixiereinrichtungen für das Reifenbauteil (6) versehen sind, die dem Reifenbauteil (6) zustellbar und im Bereich der Schneideinrichtung (14-17) angeordnet sind, und die während des Verfahrens des einteiligen Fördersystems sowohl das aus dem Speicher abgezogene und nach dem Schnitt relativ zur Schnittlinie speicherseitig verbleibende Reifenbauteil (6) als auch das auf das einteilige Fördersystem bereits aufgegebene Reifenbauteil (6) temporär fixieren, wobei die Halte- oder Fixiereinrichtung für das nach dem Schnitt relativ zur Schnittlinie speicherseitig verbleibende Reifenbauteil (6) und die Schneideinrichtung (14-17) innerhalb einer der Zuführungseinrichtung (7-10) zugeordneten Hubeinrichtung (27) angeordnet sind, mit der die Halte- oder Fixiereinrichtung, die Schneideinrichtung (14-17), und das temporär fixierte Reifenbauteil (6) in eine Position oberhalb der Ebene des Obertrums des umlaufenden / durchlaufenden Förderbandes des einteiligen Fördersystems verfahrbar sind.

2. Zuführungseinrichtung nach Anspruch 1, **dadurch gekennzeichnet, daß** die Halte- oder Fixiereinrichtung für das nach dem Schnitt relativ zur Schnittlinie speicherseitig verbleibende Reifenbauteil (6) aus einer oberhalb des Reifenbauteiles (6) angeordneten und dem Reifenbauteil (6) zustellbaren Druckplatte (28) und aus einer oberhalb der Druckplatte (28) angeordneten und der Druckplatte (28) bzw. dem Reifenbauteil(6) zustellbaren Magnetplatte (29,33) besteht, wobei das Reifenbauteil (6) mit Hilfe der Magnetplatte an der Druckplatte (28) fixierbar ist.

3. Zuführungseinrichtung nach Anspruch 1, **dadurch gekennzeichnet, daß** die Halte- oder Fixiereinrichtung für das nach dem Schnitt relativ zur Schnittlinie speicherseitig verbleibende Reifenbauteil (6) aus einer oberhalb des Reifenbauteiles (6) angeordneten und dem Reifenbauteil zustellbaren gelochten bzw. luftdurchlässigen Druckplatte (28) und aus einer oberhalb der Druckplatte angeordneten und ggf. der Druckplatte (28) bzw. dem Reifenbauteil (6) zustellbaren Vakuumeinrichtung besteht, wobei das Reifenbauteil mit Hilfe der Vakuumeinrichtung an der Druckplatte (28) fixierbar ist.

4. Zuführungseinrichtung nach Anspruch 1, **dadurch gekennzeichnet, daß** die Halte- oder Fixiereinrichtung für das nach dem Schnitt relativ zur Schnittlinie speicherseitig verbleibende Reifenbauteil (6) aus einer Vielzahl von auf einer Grundplatte angeordneten und das einteilige Fördersystem durchgreifenden Nadeln besteht, wobei die mit Nadeln versehene Grundplatte unterhalb des einteiligen Fördersystems angeordnet ist.

5. Zuführungseinrichtung nach Anspruch 1 bis 4, **dadurch gekennzeichnet, daß** die Halte- oder Fixiereinrichtung für das auf das einteilige Fördersystem bereits aufgegebene Reifenbauteil (6) als eine zwischen Obertrum und Untertrum des als umlaufendes / durchlaufendes Förderband ausgebildeten einteiligen Fördersystems angeordnete und dem Obertrum bzw. dem Reifenbauteil (6) zustellbare Magnetplatte (29,33) ausgebildet ist.

6. Zuführungseinrichtung nach Anspruch 1 bis 4, **dadurch gekennzeichnet, daß** die Halte- oder Fixiereinrichtung für das auf das einteilige Fördersystem bereits aufgegebene Reifenbauteil (6) als eine zwischen Obertrum und Untertrum des als umlaufendes / durchlaufendes und ggf. luftdurchlässiges Förderband ausgebildeten einteiligen Fördersystems angeordnete und ggf. dem Obertrum bzw. dem Reifenbauteil zustellbare Vakuumeinrichtung ausgebildet ist.

7. Zuführungseinrichtung nach Anspruch 1 bis 6, **dadurch gekennzeichnet, daß** die Zuführungseinrichtung (7-10) eine mit der Hubeinrichtung (27) bewegbare und vorzugsweise als Rollensystem ausgebildete Führungs- und Leiteinrichtung für das aus dem Speicher abgezogene Reifenbauteil (6) aufweist.

## Claims

1. Feeding device (7-10) for strip-shaped tyre components inside a conveying device (1) (servicer) for a tyre construction drum (4), especially for a belt drum for constructing the belt bundle, a plurality of layers of different or differently pre-treated, substantially strip-shaped tyre components (6) being laid in succession on the tyre construction drum (4), rolled-on and connected to the materials which have already been laid on, the feeding device (1) having
a) one or more storage means, preferably drum storage means, as well as appropriate associated feeding devices (7-10) for the tyre component (6), as well as
b) one or more cutting devices (14-17) associated with the feeding devices (7-10), for cutting the strip-shaped tyre component (6) to length,
the feeding device (1) having in addition one or more conveying lines/conveying paths in which the cut tyre components (6) are conveyed to the tyre construction drum (4), wherein
c) respectively inside one conveying line, the conveying device for removing the tyre component (6) from the storage means and for positioning the tyre component (6) in or under the cutting device (14-17), and the conveying device for conveying the cut tyre component (6) to the tyre construction drum are configured as an interconnected one-piece conveying system, preferably as a circulating/continuous conveyor belt, wherein
d) the one-piece conveying system is designed to be displaceable inside the feeding device (1) between a rear cutting and feeding position (12,12',13,13'), in which the cut tyre component (6) is fed to the one-piece conveying system, and a forward support position (3), in which the tyre component (6) is laid onto the tyre construction drum (4),
e) the feeding devices (7-10) are so disposed relative to the respective one-piece conveying system and/or so designed to be displaceable that, the one-piece conveying system is in operative connection in its rear cutting and feeding position (12,12,13,13'), respectively with one cutting device (14-17), and wherein
f) the feeding device (7-10) and the one-piece conveying system are provided with holding or fixing devices for the tyre component (6) which can be advanced towards the tyre component (6) and are disposed in the region of the cutting device (14-17), and which during the movement of the one-piece conveying system temporarily fix both the tyre component (6) which has been removed from the storage means and which, after cutting, remains on the side of the storage means relative to the cutting line, and the tyre component (6) already fed to the one-piece conveying system, the holding or fixing device for the tyre component (6) which, after cutting, remains on the side of the storage means relative to the cutting line, and the cutting device (14-17) being disposed inside a lifting device (27) associated with the feeding device (7-10), by means of which lifting device the holding or fixing device, the cutting device (14-17) and the temporarily fixed tyre component (6) may be moved into a position above the plane of the upper run of the circulating/continuous conveyor belt of the one-piece conveying system.

2. Feeding device according to claim 1, **characterised in that** the holding or fixing device for the tyre component (6) which, after cutting, remains on the side of the storage means relative to the cutting line, comprises a pressure plate (28), disposed above the tyre component (6) and capable of being advanced towards the tyre component (6), and a magnetic disc (29,33), disposed above the pressure plate (28) and capable of being advanced towards the pressure plate (28) or the tyre component (6), it being possible to fix the tyre component (6) to the pressure plate (28) with the aid of the magnetic disc.

3. Feeding device according to claim 1, **characterised in that** the holding or fixing device for the tyre component (6) which, after cutting, remains on the side of the storage means relative to the cutting line, comprises a perforated or air-permeable pressure plate (28), disposed above the tyre component (6) and capable of being advanced towards the tyre component, and a vacuum device, disposed above the pressure plate and possibly capable of being advanced towards the pressure plate (28) or the tyre component (6), it being possible to fix the tyre component to the pressure plate (28) with the aid of the vacuum device.

4. Feeding device according to claim 1, **characterised in that** the holding or fixing device for the tyre component (6) which, after cutting, remains on the side of the storage means relative to the cutting line, comprises a large number of needles which are disposed on a base plate and extend through the one-piece conveying system, the base plate provided with needles being arranged below the one-piece conveying system.

5. Feeding device according to claims 1 to 4, **characterised in that** the holding or fixing device for the tyre component (6) which has already been fed to the one-piece conveying system is configured as a magnetic disc (29, 33) which is disposed between the upper and lower runs of the one-piece conveying system in the form of a circulating/continuous conveyor belt and which may be advanced towards the upper run or the tyre component (6).

6. Feeding device according to claims 1 to 4, **characterised in that** the holding or fixing device for the tyre component (6) which has already been fed to the one-piece conveying system is configured as a vacuum device which is disposed between the upper and lower runs of the conveying system in the form of a circulating/continuous and possibly air-permeable conveyor belt and which may possibly be advanced towards the upper run or the tyre component.

7. Feeding device according to claims 1 to 6, **characterised in that** the feeding device (7-10) has a guiding and leading device for the tyre component (6) which is removed from the storage means, said guiding and leading device being displaceable by means of the lifting device (27) and preferably in the form of a roller system.

## Revendications

1. Dispositif d'alimentation (7 - 10). pour des parties constitutives d'un pneumatique se présentant sous forme de bandes, à l'intérieur d'un dispositif d'amenée (1) *(en anglais servicer : alimenteur)*, pour un tambour de montage (4) des pneumatiques, en particulier pour un tambour de ceinture servant au montage du paquet de ceinture, où plusieurs nappes de parties constitutives (6) du pneumatique, différentes ou prétraitées de façon différente, se présentant essentiellement sous forme de bandes, sont, les unes après les autres, appliquées et moletées sur le tambour de montage (4) des pneumatiques et assemblées avec les matériaux déjà appliqués, où le dispositif d'amenée (1) présente :
a) un ou plusieurs éléments de stockage, de préférence des éléments de stockage à tambour, ainsi que des dispositifs d'alimentation respectifs (7 - 10), conçus de façon appropriée, pour la partie constitutive (6) du pneumatique,
b) ainsi qu'un ou plusieurs dispositifs de coupe (14 - 17) associés aux dispositifs d'alimentation (7 - 10) servant à couper, à la longueur voulue, la partie constitutive (6) du pneumatique se présentant sous forme de bandes,
où le dispositif d'amenée (1) présente en outre une ou plusieurs lignes de transport / trajets de transport dans lesquels les parties constitutives coupées (6) du pneumatique sont transportées jusqu'au tambour de montage (4) des pneumatiques,
c) où, respectivement, à l'intérieur d'une ligne de transport, le dispositif de transport servant à extraire de l'élément de stockage, la partie constitutive (6) du pneumatique, et servant à positionner la partie constitutive (6) du pneumatique dans ou sous le dispositif de coupe (14 - 17), et le dispositif de transport servant au transport de la partie constitutive coupée (6) du pneumatique vers le tambour de montage (4) des pneumatiques, sont configurés, une fois réunis l'un à l'autre, comme un système de transport assemblé et formant une seule partie, de préférence comme une bande transporteuse circulaire / continue,
d) où le système de transport formant une seule partie est conçu, à l'intérieur du dispositif d'amenée (1), en étant mobile entre une position de coupe et d'alimentation (12, 12', 13, 13'), reculée, dans laquelle la partie constitutive coupée (6) du pneumatique est fournie au système de transport formant une seule partie, et une position d'appui (3), avancée, dans laquelle la partie constitutive (6) du pneumatique est appliquée sur le tambour de montage (4) des pneumatiques,
e) où les dispositifs d'alimentation (7 - 10) sont disposés et/ou conçus en étant mobiles par rapport au système de transport respectif formant une seule partie, de manière telle que le système de transport formant une seule partie, dans sa position de coupe et d'alimentation (12, 12', 13, 13'), reculée, soit à chaque fois en liaison active avec un dispositif de coupe (14 - 17), et
f) où le dispositif d'alimentation (7 - 10) et le système de transport formant une seule partie sont dotés de dispositifs de retenue ou de fixation pour la partie constitutive (6) du pneumatique, dispositifs de retenue ou de fixation qui peuvent être affectés à la partie constitutive (6) du pneumatique et sont disposés dans la zone du dispositif de coupe (14 - 17), et qui, pendant le déplacement du dispositif de transport formant une seule partie, fixent temporairement aussi bien la partie constitutive (6) du pneumatique extraite de l'élément de stockage et restant après la coupe, côté élément de stockage par rapport à la ligne de coupe, que la partie constitutive (6) du pneumatique déjà fournie au système de transport formant une seule partie, où le dispositif de retenue ou de fixation, pour la partie constitutive (6) du pneumatique restant après la coupe, côté élément de stockage par rapport à la ligne de coupe, et le dispositif de coupe (14 - 17), sont disposés à l'intérieur d'un dispositif de levage (27) associé au dispositif d'alimentation (7 - 10), dispositif de levage avec lequel le dispositif de retenue ou de fixation, le dispositif de coupe (14 - 17) et la partie constitutive (6) du pneumatique fixée temporairement, sont mobiles dans une position placée au-dessus du plan du brin supérieur de la bande transporteuse circulaire / continue du système de transport formant une seule partie.

2. Dispositif d'alimentation selon la revendication 1, **caractérisé en ce que** le dispositif de retenue ou de fixation, pour la partie constitutive (6) du pneumatique restant après la coupe, côté élément de stockage par rapport à la ligne de coupe, se compose d'une plaque de serrage (28) disposée au-dessus de la partie constitutive (6) du pneumatique et pouvant être affectée à la partie constitutive (6) du pneumatique, et d'une plaque magnétique (29, 33) disposée au-dessus de la plaque de serrage (28) et pouvant être affectée à la plaque de serrage (28) ou à la partie constitutive (6) du pneumatique, la partie constitutive (6) du pneumatique pouvant être fixée sur la plaque de serrage (28), à l'aide de la plaque magnétique.

3. Dispositif d'alimentation selon la revendication 1, **caractérisé en ce que** le dispositif de retenue ou de fixation, pour la partie constitutive (6) du pneumatique restant après la coupe, côté élément de stockage par rapport à la ligne de coupe, se compose d'une plaque de serrage (28), perforée ou perméable à l'air, disposée au-dessus de la partie constitutive (6) du pneumatique et pouvant être affectée à la partie constitutive du pneumatique, et d'un dispositif à dépression disposé au-dessus de la plaque de serrage et pouvant être affecté, le cas échéant, à la plaque de serrage (28) ou à la partie constitutive (6) du pneumatique, la partie constitutive du pneumatique pouvant être fixée sur la plaque de serrage (28), à l'aide du dispositif à dépression.

4. Dispositif d'alimentation selon la revendication 1, **caractérisé en ce que** le dispositif de retenue ou de fixation, pour la partie du pneumatique (6) restant après la coupe, côté élément de stockage par rapport à la ligne de coupe, se compose d'un grand nombre d'aiguilles disposées sur une plaque de base et pénétrant le système de transport formant une seule partie, la plaque de base dotée d'aiguilles étant disposée au-dessous du système de transport formant une seule partie.

5. Dispositif d'alimentation selon l'une quelconque des revendications 1 à 4, **caractérisé en ce que** le dispositif de retenue ou de fixation, pour la partie constitutive (6) du pneumatique déjà fournie au système de transport formant une seule partie, est configuré comme une plaque magnétique (29, 33) disposée entre le brin supérieur et le brin inférieur du système de transport formant une seule partie et configuré comme une bande transporteuse circulaire / continue, et pouvant être affectée au brin supérieur ou à la partie constitutive (6) du pneumatique.

6. Dispositif d'alimentation selon l'une quelconque des revendications 1 à 4, **caractérisé en ce que** le dispositif de retenue ou de fixation, pour la partie constitutive (6) du pneumatique déjà fournie au système de transport formant une seule partie, est configuré comme un dispositif à dépression disposé entre le brin supérieur et le brin inférieur du système de transport formant une seule partie et configuré comme une bande transporteuse circulaire / continue et, le cas échéant, perméable à l'air, ce dispositif à dépression pouvant être affecté, le cas échéant, au brin supérieur ou à la partie constitutive du pneumatique.

7. Dispositif d'alimentation selon l'une quelconque des revendications 1 à 6, **caractérisé en ce que** le dispositif d'alimentation (7 - 10) présente un dispositif de guidage et directeur pour la partie constitutive (6) du pneumatique extraite de l'élément de stockage, ce dispositif de guidage et conducteur étant mobile avec le dispositif de levage (27) et configuré, de préférence, comme un système à rouleaux.
